# EUROPEAN PATENT APPLICATION

(11) **EP 2 108 834 A2**
(43) Date of publication of application: **14.10.2009**
(21) Application number: 08170068.4
(22) Date of filing: 27.11.2008
(51) Int. Cl.: F03D 11/00

(54) **Wind turbine maintenance system**

(30) Priority: 12.12.2007 US 954959
(71) Applicant: General Electric Company, Schenectady, NY 12345 (US)
(72) Inventor: Sharonova, Larisa, 44538 Luenen Salzbergen (DE)
(74) Representative: Bedford, Grant Richard

(57) **Abstract**

A wind turbine monitoring system (200) having a central monitoring device 201 and one or more wind turbines. The central monitoring device (201) is capable of receiving signals (203) from one or more wind turbines (100). The wind turbines (100) each include one or more cameras (301) arranged and disposed to provide visual signals (203) transmittable to the central monitoring device (201). The visual signals (203) generated by the cameras (301) provide sufficient information to the central monitoring device (201) to determine whether maintenance to the wind turbine (100) is required.

## Description

The invention is directed generally to wind turbine monitoring and maintenance.

Recently, wind turbines have received increased attention as environmentally safe and relatively inexpensive alternative energy sources. With this growing interest, considerable efforts have been made to develop wind turbines that are reliable and efficient.

Generally, a wind turbine includes a rotor having multiple blades. The rotor is mounted to a housing or nacelle, which is positioned on top of a truss or tubular tower. Utility grade wind turbines (i.e., wind turbines designed to provide electrical power to a utility grid) can have large rotors (e.g., 30 or more meters in length). In addition, the wind turbines are typically mounted on towers that are at least 60 meters in height. Blades on these rotors transform wind energy into a rotational torque or force that drives one or more generators. As the blades are rotated by the wind, noise is inherently generated.

Wind turbines may be installed in remote locations that are generally difficult to monitor or service on a regular basis. The cost of deploying personnel to the remote locations for service and maintenance is expensive and inefficient. In some locations, the wind turbine facilities are subject to vandalism or burglary. As wind turbines are damaged, such as by vandalism, additional maintenance is required increasing the operating costs of the wind turbine. At present, the wind turbine including the components of the wind turbine, such as the tower, and the electronic and structural components and equipment, includes no protection against vandalism and burglary.

What is needed is a method and system for providing efficient maintenance and emergency response to wind turbine facilities. In addition, a method and system is needed for detecting burglary and/or vandalism and notifying wind turbine operators to permit efficient maintenance, such as repair of damage caused by the burglary or vandalism.

One aspect of the present invention includes a wind turbine monitoring system having a central monitoring device and one or more wind turbines. The central monitoring device is capable of receiving signals from one or more wind turbines. The wind turbines each include one or more cameras arranged and disposed to provide visual signals transmittable to the central monitoring device. The visual signals generated by the cameras provide sufficient information to the central monitoring device to determine whether maintenance to the wind turbine is required.

Another aspect of the present invention includes a method for providing maintenance to a wind turbine. The method includes providing a central monitoring device and one or more wind turbines. The central monitoring device is capable of receiving signals from the wind turbines. The wind turbines each include one or more cameras arranged and disposed to provide visual signals transmittable to the central monitoring device. The visual signals generated by the one or more cameras provide sufficient information to the central monitoring device to determine whether maintenance to the wind turbine is required. The visual signals are transmitted to the central monitoring device and are analyzed. A determination of whether maintenance is required is then made in response to the visual signals.

An advantage of the present disclosure is that the monitoring system is capable of increasing safety at the wind turbine.

Other features and advantages of the present invention will be apparent from the following more detailed description of the preferred embodiment, taken in conjunction with the accompanying drawings which illustrate, by way of example, the principles of the invention, and in which:
FIG. 1 shows a side elevational view of a wind turbine.
FIG. 2 shows a wind turbine monitoring system according to an embodiment of the present disclosure.
FIG. 3 shows a camera arrangement on the exterior of the wind turbine according to an embodiment of the present disclosure.
FIG. 4 shows a cutaway view of a nacelle having a camera arrangement in the wind turbine according to an embodiment of the present invention.

Wherever possible, the same reference numbers will be used throughout the drawings to refer to the same or like parts.

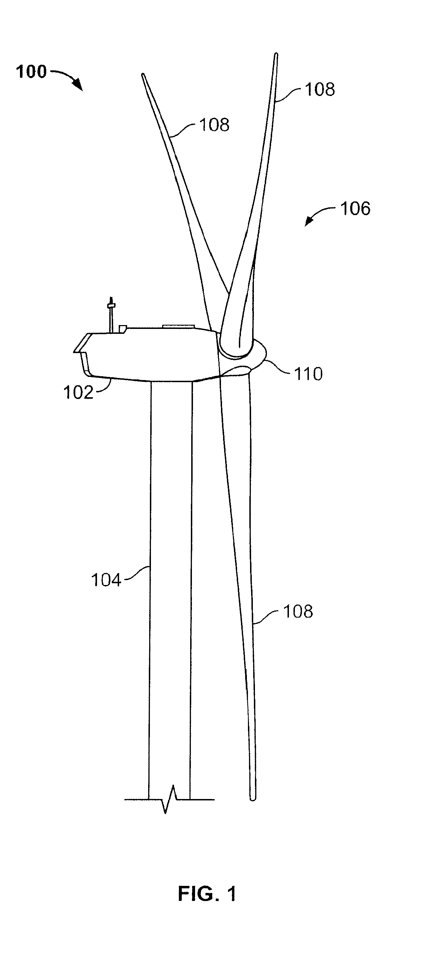

As shown in FIG. 1, a wind turbine 100 generally comprises a nacelle 102 housing a generator (not shown in FIG. 1). Nacelle 102 is a housing mounted atop a tower 104, only a portion of which is shown in FIG. 1. The height of tower 104 is selected based upon factors and conditions known in the art, and may extend to heights up to 60 meters or more. The wind turbine 100 may be installed on any terrain providing access to areas having desirable wind conditions. The terrain may vary greatly and may include, but is not limited to, mountainous terrain or off-shore locations. Wind turbine 100 also comprises a rotor 106 that includes one or more rotor blades 108 attached to a rotating hub 110. Although wind turbine 100 illustrated in FIG. 1 includes three rotor blades 108, there are no specific limits on the number of rotor blades 108 required by various embodiments of the present invention. As the blades 108 rotate, noise is generated.

The wind turbine 100 and tower 104 includes a large variety of equipment and components that are susceptible to vandalism and/or burglary, particularly in wind turbines 100 installed in more remote locations. Certain components are susceptible to theft, while others are subject to damage or destruction from access. In addition, exterior surfaces of the tower 104 may be damaged, requiring repair or servicing.

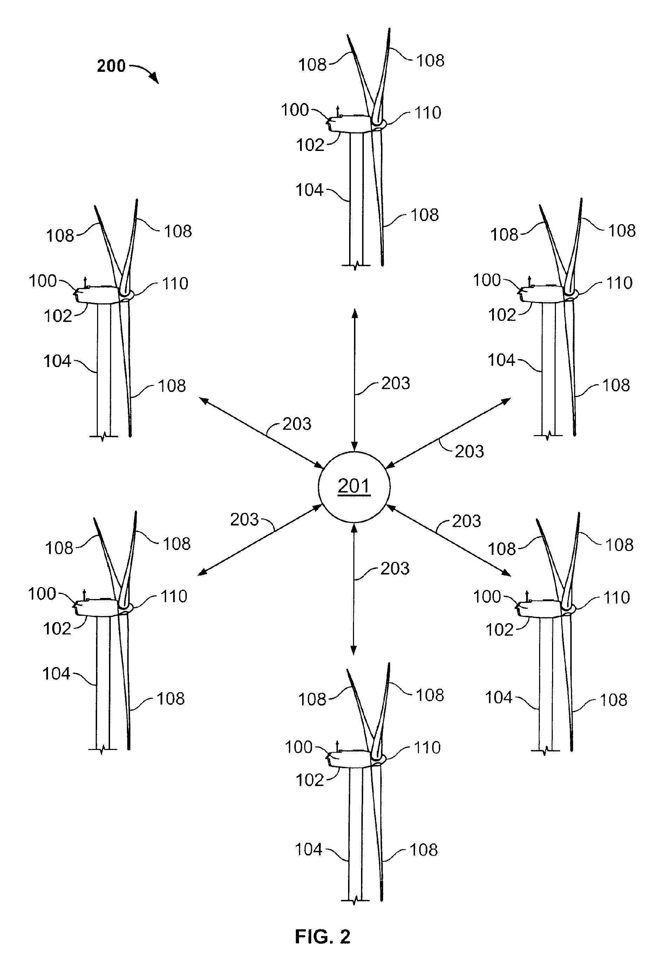

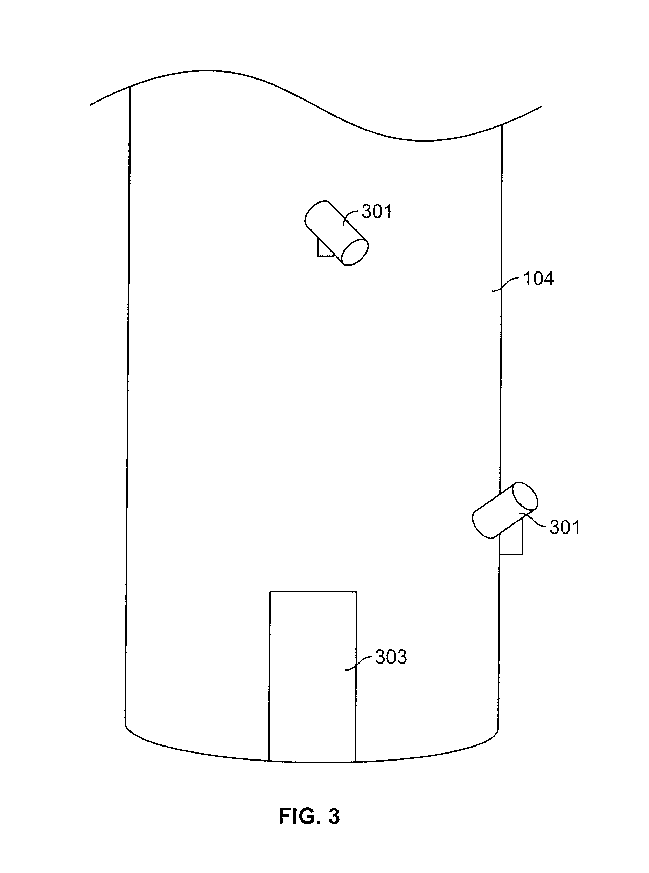

The present disclosure utilizes one or more cameras 301 (see e.g., FIGS. 3-4) to generate a visual signal 203 (see e.g., FIG. 2) that can be analyzed to determine whether components are missing, damaged or otherwise require maintenance. In addition, if unauthorized personnel are detected, authorities or emergency services may be contacted and/or dispatched to the wind turbine 100 and tower 104.

FIG. 2 shows a wind turbine maintenance system 200 according to an embodiment of the present disclosure. The system 200 includes a central monitoring device 201 and a plurality of wind turbines 100. The number of wind turbines 100 in the system 200 is not limited and may include one or a large number of wind turbines 100. A camera 301 (not shown in FIG. 2) is mounted on or within the wind turbine 100 and tower 104 and generates a visual signal 203. The visual signal 203 may be a digital, analog or other type of signal that provides an image, series of images or video that is viewable by the central monitoring device 201. The visual signal 203 is preferably includes images within the visible light, but may also include signals or images corresponding to other wavelengths or spectrums of light and may be varied and dependent upon the area or equipment being monitored. The central monitoring device 201 may be a data acquisition device such as a microprocessor, a data storage device or other analysis tool. In another embodiment, the central monitoring device 201 may be personnel or a communication device usable by personnel. In another embodiment the central monitoring device 201 is the power control for a wind turbine farm or a utility operating the wind turbine farm. The central monitoring device 201 may be autonomous or may be integrated within the wind farm control. The visual signals 203 may be transmitted to and/or from the wind turbine 100 and tower 104 in order to provide control or otherwise communicate with the wind turbine 100 in response to a condition requiring maintenance in response to the visual signals. In certain embodiments, equipment or other operational parameters.

FIG. 3 shows a camera arrangement according to one embodiment of the present disclosure. The wind turbine tower 104 typically includes a door 303 or similar access point that may permit access to stairs or ladders, which may provide access to the nacelle 102. In one preferred embodiment, the camera 301 is mounted at or in close proximity to the door 303.

A camera 301 may be mounted in a location to monitor the area adjacent or in close proximity to access to door 303. Visual signals 203 provided to the central monitoring device 201 may be monitored, stored and/or analyzed to determine whether unauthorized personnel are attempting to gain access to the wind turbine 100 or are in close proximity to the wind turbine 100. In addition cameras 301 may be mounted in locations to view the surrounding terrain to monitor terrain conditions and to detect unauthorized personnel. As discussed above, the visual signals 203 permit the central monitoring device 201 to determine whether maintenance is required. For example, the visual signals 203 may indicate that unauthorized personnel, undesired terrain conditions or other undesired conditions surrounding the wind turbine 100 exists, and the central monitoring device 201 may take appropriate action. In one embodiment, the central monitoring device 201 notifies local authorities or emergency services. In another embodiment, the central monitoring device 201 dispatches maintenance personnel to service the wind turbine 100. Notifications and/or dispatching may be accomplished directly or indirectly by the central monitoring device 201 via a signal, notification or other indicia. "Maintenance" as utilized herein includes repair, restoring, replacing, removing or otherwise servicing wind turbine components or equipment.

While not so limited maintenance may include removing spray paint, repairing damaged components, replacing stolen components or otherwise removing unauthorized personnel or unauthorized equipment from the wind turbine.

The camera 301 may be any suitable type of camera 301 capable of converting images into visual signals. In one embodiment, a still camera, a web camera or a video camera may be utilized to generate the visual signals. In addition, the camera 301 may be a still-camera or may take continuous images or video. The resolution or image density of the camera 301 may be any suitable resolution that provides ease of transmission, while permitting analysis to determine whether maintenance is required. In one embodiment, the camera 301 may be an internet protocol (IP) camera. In this embodiment, the camera 301 uses IP address and sends information to a computer or other device in the central monitoring device 201.

The camera 301 may also include additional features, such as motion detection, lighting, actuation or other features known for use in providing image acquisition. For example, a motion detector may be provided with the camera 301 to activate the camera 301 selectively, such as when unauthorized personnel pass in close proximity to the camera 301. The ability to selectively activate the camera 301 desirably permits reduced camera operation to reduce power requirements and to reduce the volume of undesired (e.g., wherein no action by the central monitoring device 201 is required) visual signals 203. In addition, a camera may be mounted on a rotational and/or linear actuator that can be locally or remotely controlled to obtain various desired views to reduce the number of cameras 301 required to monitor a plurality of components.

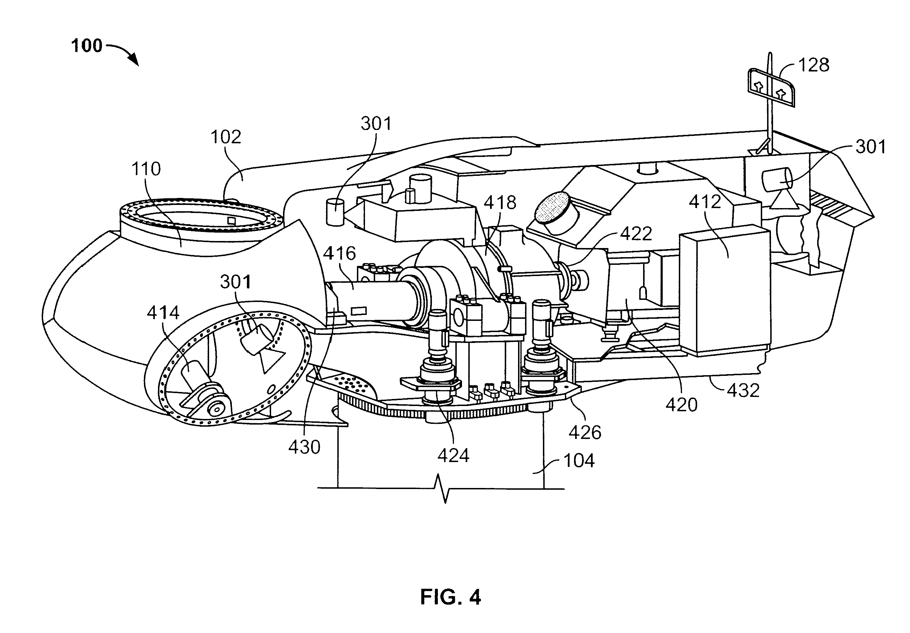

As shown in FIG. 4, various components are housed in nacelle 102 atop tower 104 of wind turbine 100. For example, a variable blade pitch drive 414 may control the pitch of blades 108 (not shown in FIG. 4) that drive hub 110 as a result of wind. In some configurations, the pitches of blades 108 are individually controlled by blade pitch drive 414. The drive train of the wind turbine 100 includes a main rotor shaft 416 connected to hub 110 via main bearing 430 and (in some configurations), at an opposite end of shaft 416 to a gear box 418. Gear box 418, in some configurations, utilizes a dual path geometry to drive an enclosed high speed shaft. The high speed shaft (not shown in FIG. 4) is used to drive generator 420, which is mounted on main frame 432. In some configurations, rotor torque is transmitted via coupling 422. Yaw drive 424 and yaw deck 426 provide a yaw orientation system for wind turbine 100 to rotate the wind turbine to a position that faces the wind. Meterological boom 428 provides information for a turbine control system, including wind direction and/or wind speed. Cameras 301 may be mounted at various locations within or on the nacelle 102 to monitor equipment condition, status and/or operating conditions. For example, a camera 301 may be mounted to monitor the generator 420 and determine whether maintenance is required or if vandalism or burglary has occurred. In addition, if components are worn, if conditions are dangerous or outside acceptable operational parameters (i.e. smoking, on fire, dislodged, discolored or otherwise damaged from operation), the visual signals 203 provided to the central monitoring device 201 may determine that the wind turbine requires maintenance. In addition, the cameras 301 may be mounted to monitor components, such as the gear box 418, the pitch drive 414, the generator 420 or other components that may be damaged via operation, vandalism or burglary.

An embodiment of the present disclosure includes a method for providing maintenance to a wind turbine. The method permits a central monitoring device 201 to obtain and analyze visual signals from one or more wind turbines. The visual signals 203 are generated from cameras 301 mounted in various locations on or within the wind turbine. The visual signals 203 are transmitted to the central monitoring device 201. The transmission may take place using any suitable transmission method including wired or wireless transmission. The visual signals are analyzed by the central monitoring device 201 to determine whether maintenance of the wind turbine is required. The analysis may be accomplished using any suitable technique including visual inspection, data analysis, color analysis, motion detection or any other technique that is capable of determining the presence of unauthorized personnel and/or whether wind turbine, components and/or equipment require maintenance. The analysis may result in dispatching emergency services to service the wind turbine if maintenance is determined to be required. The analysis may result in dispatching maintenance personnel to service the wind turbine if maintenance is determined to be required.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the preferred mode contemplated for carrying out this invention, but that the invention will include all embodiments falling within the scope of the appended claims.

Various aspects and embodiments of the present invention will now be defined in the following numbered clauses:
1. A wind turbine monitoring system comprising:
   a central monitoring device, the central monitoring device being capable of receiving signals from one or more wind turbines, the one or more wind turbines each comprising:
      one or more cameras arranged and disposed to provide visual signals transmittable to the central monitoring device;
         wherein the visual signals generated by the one or more cameras provide sufficient information to the central monitoring device to determine whether maintenance to the wind turbine is required.
2. The system of clause 1, wherein the visual signals include images wherein vandalism is visible.
3. The system of any preceding clause, wherein the visual signals include images of equipment wherein the conditions of the equipment is visible.
4. The system of any preceding clause, wherein the visual signals include images of surrounding terrain.
5. The system of any preceding clause, wherein the visual signals include images of wind turbine structures wherein the conditions of the wind turbine structures is visible.
6. The system of any preceding clause, wherein the visual signals are real-time images.
7. The system of any preceding clause, wherein the visual signals are stored images.
8. The system of any preceding clause, wherein the camera is a web camera.
9. The system of any preceding clause, wherein the camera is activated by a motion sensor.
10. A method for providing maintenance to a wind turbine comprising:
   providing a central monitoring device, the central monitoring device being capable of receiving signals from one or more wind turbines, the one or more wind turbines each comprising:
      one or more cameras arranged and disposed to provide visual signals transmittable to the central monitoring device;
         wherein the visual signals generated by the one or more cameras provide sufficient information to the central monitoring device to determine whether maintenance to the wind turbine is required;
   transmitting the visual signals to the central monitoring device;
   analyzing the visual signals; and
   determining whether maintenance of the wind turbine is required in response to the visual signals.
11. The method of clause 10, wherein the analyzing includes inspecting the images for unauthorized personnel.
12. The method of clause 10 or 11, further comprising dispatching emergency services to service the wind turbine if maintenance is determined to be required.
13.The method of any of clauses 10 to 12, wherein the analyzing includes inspecting wind turbine equipment for damage or vandalism.
14. The method of any of clauses 10 to 13, further comprising dispatching maintenance personnel to service the wind turbine if maintenance is determined to be required.
15. The method of any of clauses 10 to 14, further comprising replacing wind turbine components if maintenance is determined to be required.
16. The method of any of clauses 10 to 15, further comprising repairing wind turbine components if maintenance is determined to be required.
17. The method of any of clauses 10 to 16, wherein the visual signals are real-time images.
18. The method of any of clauses 10 to 17, wherein the visual signals are stored images.
19. The method of any of clauses 10 to 18, wherein the camera is a web camera.
20. The method of any of clauses 10 to 19, wherein the camera is activated by motion sensor.

## Claims

1. A wind turbine monitoring system (200) comprising:
a central monitoring device (201), the central monitoring device (201) being capable of receiving signals (203) from one or more wind turbines (100), the one or more wind turbines (100) each comprising:
one or more cameras (301) arranged and disposed to provide visual signals (203) transmittable to the central monitoring device (201);
wherein the visual signals (203) generated by the one or more cameras (301) provide sufficient information to the central monitoring device (201) to determine whether maintenance to the wind turbine (100) is required.

2. The system of claim 1, wherein the visual signals (203) include images wherein vandalism is visible.

3. The system of claim 1 or claim 2, wherein the visual signals (203) include images of equipment wherein the conditions of the equipment is visible.

4. The system of any preceding claim, wherein the visual signals (203) include images of surrounding terrain.

5. The system of any preceding claim, wherein the visual signals (203) include images of wind turbine structures wherein the conditions of the wind turbine structures is visible.

6. The system of any preceding claim, wherein the visual signals (203) are real-time images.

7. The system of any preceding claim, wherein the visual signals (203) are stored images.

8. The system of any preceding claim, wherein the camera (301) is a web camera.

9. The system of any preceding claim, wherein the camera (301) is activated by a motion sensor.
